# EUROPEAN PATENT APPLICATION

(11) **EP 1 906 555 A1**
(43) Date of publication of application: **02.04.2008**
(21) Application number: 07008248.2
(22) Date of filing: 23.04.2007
(51) Int. Cl.: H04B 7/10

(54) **Method and system for utilizing polarized antennas in coexistence systems**

(30) Priority: 29.09.2006 US 536675
(71) Applicant: Broadcom Corporation, Irvine, CA 92617 (US)
(72) Inventor: Rofougaran, Ahmadreza, Irvine CA 92617 (US)
(74) Representative: Jehle, Volker Armin

(57) **Abstract**

Certain aspects of a method and system for utilizing polarized antennas in coexistence systems are disclosed. Aspects of one method may include a coexistence system that comprises a first communication device and a second communication device that communicate data utilizing a first polarized antenna and a second antenna that is orthogonally polarized with respect to the first polarized antenna. The communication devices may be enabled to handle Bluetooth (BT) protocol data, Wireless Local Area Network (WLAN) protocol data, cellular protocol data, and ZigBee protocol data.

## Description

### CROSS-REFERENCE TO RELATED APPLICATIONS/INCORPORATION BY REFERENCE

This application makes reference to:
United States Application Serial No. _____ (Attorney Docket No. 17783US01), filed on even date herewith;
United States Application Serial No. _____ (Attorney Docket No. 17784US01), filed on even date herewith;
United States Application Serial No. _____ (Attorney Docket No. 17785US01), filed on even date herewith;
United States Application Serial No. _____ (Attorney Docket No. 17786US01), filed on even date herewith;
United States Application Serial No. _____ (Attorney Docket No. 17787US01), filed on even date herewith;
United States Application Serial No. _____ (Attorney Docket No. 17788US01), filed on even date herewith;
United States Application Serial No. _____ (Attorney Docket No. 17789US01), filed on even date herewith;
United States Application Serial No. _____ (Attorney Docket No. 17790US01), filed on even date herewith;
United States Application Serial No. _____ (Attorney Docket No. 17791US01), filed on even date herewith;
United States Application Serial No. _____ (Attorney Docket No. 17792US01), filed on even date herewith;
United States Application Serial No. _____ (Attorney Docket No. 17916US01), filed on even date herewith;
United States Application Serial No. _____ (Attorney Docket No. 17917US01), filed on even date herewith;
United States Application Serial No. _____ (Attorney Docket No. 17918US01), filed on even date herewith;
United States Application Serial No. _____ (Attorney Docket No. 17920US01), filed on even date herewith;
United States Application Serial No. _____ (Attorney Docket No. 17921US01), filed on even date herewith;
United States Application Serial No. _____ (Attorney Docket No. 17922US01), filed on even date herewith;
United States Application Serial No. _____ (Attorney Docket No. 17923US01), filed on even date herewith;
United States Application Serial No. _____ (Attorney Docket No. 17924US01), filed on even date herewith;
United States Application Serial No. _____ (Attorney Docket No. 17925US01), filed on even date herewith;
United States Application Serial No. _____ (Attorney Docket No. 17926US01), filed on even date herewith;
United States Application Serial No. _____ (Attorney Docket No. 17927US01), filed on even date herewith;
United States Application Serial No. _____ (Attorney Docket No. 17928US01), filed on even date herewith;
United States Application Serial No. _____ (Attorney Docket No. 17929US01), filed on even date herewith; and
United States Application Serial No. _____ (Attorney Docket No. 17930US01), filed on even date herewith.

The above referenced applications are hereby incorporated herein by reference in their entirety.

### FIELD OF THE INVENTION

Certain embodiments of the invention relate to coexistence communication systems. More specifically, certain embodiments of the invention relate to a method and system for utilizing polarized antennas in coexistence systems.

### BACKGROUND OF THE INVENTION

In most current wireless communication systems, nodes in a network may be configured to operate based on a single transmit and a single receive antenna. However, for many current wireless systems, the use of multiple transmit and/or receive antennas may result in an improved overall system performance. These multi-antenna configurations, also known as smart antenna techniques, may be utilized to reduce the negative effects of multipath and/or signal interference may have on signal reception. Existing systems and/or systems which are being currently deployed, for example, CDMA-based systems, TDMA-based systems, WLAN systems, and OFDM-based systems such as IEEE 802.11 a/g/n, may benefit from configurations based on multiple transmit and/or receive antennas. It is anticipated that smart antenna techniques may be increasingly utilized both in connection with the deployment of base station infrastructure and mobile subscriber units in cellular systems to address the increasing capacity demands being placed on those systems. These demands arise, in part, from a shift underway from current voice-based services to next-generation wireless multimedia services that provide voice, video, and data communication.

The utilization of multiple transmit and/or receive antennas is designed to introduce a diversity gain and array gain and to suppress interference generated within the signal reception process. Such diversity gains improve system performance by increasing received signal-to-noise ratio, by providing more robustness against signal interference, and/or by permitting greater frequency reuse for higher capacity. Systems that utilize multiple transmit and multiple receive antenna may be referred to as multiple-input multiple-output (MIMO) systems. One attractive aspect of multi-antenna systems, in particular MIMO systems, is the significant increase in system capacity that may be achieved by utilizing these transmission configurations. For a fixed overall transmitted power, the capacity offered by a MIMO configuration may scale with the increased signal-to-noise ratio (SNR).

Both Bluetooth and WLAN radio devices, such as those used in, for example, handheld wireless terminals, generally operate in the 2.4 GHz (2.4000-2.4835 GHz) Industrial, Scientific, and Medical (ISM) unlicensed band. Other radio devices, such as those used in cordless phones, may also operate in the ISM unlicensed band. While the ISM band provides a suitable low-cost solution for many of short-range wireless applications, it may also have some drawbacks when multiple users operate simultaneously. For example, because of the limited bandwidth, spectrum sharing may be necessary to accommodate multiple users. Multiple active users may also result in significant interference between operating devices. Moreover, in some instances, microwave ovens may also operate in this frequency spectrum and may produce significant interference or blocking signals that may affect Bluetooth and/or WLAN transmissions.

In order to transfer maximum energy or power between a transmit and a receive antenna, both antennas should have the same spatial orientation, the same polarization sense and the same axial ratio. When the antennas are not aligned or do not have the same polarization, there may be a reduction in energy or power transfer between the two antennas. This reduction in power transfer may reduce the overall system efficiency and performance. When the transmit and receive antennas are both linearly polarized, physical antenna misalignment may result in a polarization mismatch loss.

Multipath signals may arrive at a mobile handset antenna via the reflection of the direct signal off of nearby objects. If the reflecting objects are oriented such that they are not aligned with the polarization of the incident wave, the reflected wave may experience a shift in polarization shift. The resultant or total signal available to the receiver at either end of the communications link may be a vector summation of the direct signal and all of the multipath signals. In many instances, there may be a number of signals arriving at the receive site that are not aligned with the polarization of the system antenna. As the receive antenna rotates from vertical to horizontal, it may intercept or receive energy from these multiple signals.

In polarization diversity systems, a dual linear polarized antenna may be utilized to receive samples and track the polarization output providing the strongest signal level. Each output may provide a total signal that may be a combination of all incident signals. This combined signal may be a function of the amplitude and phase of each signal as well as the polarization mismatch of each signal.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for utilizing polarized antennas in coexistence systems, substantially as shown in and/or described in connection with at least one of the figures, as set forth more completely in the claims.
According to an aspect of the invention, a method is provided for providing wireless communication, the method comprising:
in a single coexistence terminal comprising at least a first communication device that handles a first communication protocol and a second communication device that handles a second communication protocol, communicating data via said first communication device utilizing a first polarized antenna; and
communicating data via said second communication device utilizing a second antenna that is orthogonally polarized with respect to said first polarized antenna.
Advantageously, said first communication device handles said first communication protocol selected from a group consisting of a Bluetooth (BT) protocol, a Wireless Local Area Network (WLAN) protocol, a cellular protocol, and a ZigBee protocol.
Advantageously, said second communication device handles said second communication protocol selected from a group consisting of said BT protocol, said WLAN protocol, said cellular protocol, and said ZigBee protocol excluding said selected said first communication protocol.
Advantageously, said communicated data is at least one of: Bluetooth (BT) protocol data, Wireless Local Area Network (WLAN) protocol data, cellular protocol data, and ZigBee protocol data.
Advantageously, the method further comprises transmitting said data via said first communication device utilizing said first polarized antenna.
Advantageously, the method further comprises transmitting said data via said second communication device utilizing said second antenna.
Advantageously, the method further comprises receiving said data via said first communication device utilizing said first polarized antenna.
Advantageously, the method further comprises receiving said data via said second communication device utilizing said second antenna.
According to an aspect of the invention, a machine-readable storage is provided having stored thereon, a computer program having at least one code section for providing wireless communication, the at least one code section being executable by a machine for causing the machine to perform steps comprising:
in a single coexistence terminal comprising at least a first communication device that handles a first communication protocol and a second communication device that handles a second communication protocol, communicating data via said first communication device utilizing a first polarized antenna; and
communicating data via said second communication device utilizing a second antenna that is orthogonally polarized with respect to said first polarized antenna.
Advantageously, said first communication device handles said first communication protocol selected from a group consisting of a Bluetooth (BT) protocol, a Wireless Local Area Network (WLAN) protocol, a cellular protocol, and a ZigBee protocol.
Advantageously, said second communication device handles said second communication protocol selected from a group consisting of said BT protocol, said WLAN protocol, said cellular protocol, and said ZigBee protocol excluding said selected said first communication protocol.
Advantageously, said communicated data is at least one of: Bluetooth (BT) protocol data, Wireless Local Area Network (WLAN) protocol data, cellular protocol data, and ZigBee protocol data.
Advantageously, said at least one code section comprises code for transmitting said data via said first communication device utilizing said first polarized antenna.
Advantageously, said at least one code section comprises code for transmitting said data via said second communication device utilizing said second antenna.
Advantageously, said at least one code section comprises code for receiving said data via said first communication device utilizing said first polarized antenna.
Advantageously, said at least one code section comprises code for receiving said data via said second communication device utilizing said second antenna.
According to an aspect of the invention, a system is provided for achieving diversity gain in a communication network, the system comprising:
in a single coexistence terminal comprising at least a first communication device that handles a first communication protocol and a second communication device that handles a second communication protocol, at least one circuit that enables communication of data via said first communication device utilizing a first polarized antenna; and
said at least one circuit enables communication of data via said second communication device utilizing a second antenna that is orthogonally polarized with respect to said first polarized antenna.
Advantageously, said first communication device handles said first communication protocol selected from a group consisting of a Bluetooth (BT) protocol, a Wireless Local Area Network (WLAN) protocol, a cellular protocol, and a ZigBee protocol.
Advantageously, said second communication device handles said second communication protocol selected from a group consisting of said BT protocol, said WLAN protocol, said cellular protocol, and said ZigBee protocol excluding said selected said first communication protocol.
Advantageously, said communicated data is at least one of: Bluetooth (BT) protocol data, Wireless Local Area Network (WLAN) protocol data, cellular protocol data, and ZigBee protocol data.
Advantageously, said at least one circuit enables transmission of said data via said first communication device utilizing said first polarized antenna.
Advantageously, said at least one circuit enables transmission of said data via said second communication device utilizing said second antenna.
Advantageously, said at least one circuit enables receiving of said data via said first communication device utilizing said first polarized antenna.
Advantageously, said at least one circuit enables receiving of said data via said second communication device utilizing said second antenna.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary WLAN infrastructure network comprising a basic service set (BSS) with stations that support WLAN/Bluetooth coexistence, in accordance with an embodiment of the invention.

FIG. 1B is a block diagram that illustrates an exemplary usage model for a coexistence terminal with collocated WLAN and Bluetooth radio devices, in accordance with an embodiment of the invention.

FIG. 1C is a diagram that illustrates antenna polarization in wireless communication systems, in accordance with an embodiment of the invention.

FIG. 2A is a block diagram that illustrates an exemplary coexistence system that supports WLAN and Bluetooth radio operations, in accordance with an embodiment of the invention.

FIG. 2B is a block diagram that illustrates an exemplary coexistence system that supports WLAN and cellular radio operations, in accordance with an embodiment of the invention.

FIG. 2C is a block diagram that illustrates an exemplary coexistence system that supports cellular and Bluetooth radio operations, in accordance with an embodiment of the invention.

FIG. 2D is a block diagram that illustrates an exemplary coexistence system that supports ZigBee radio and one of cellular, Bluetooth and WLAN radio operations, in accordance with an embodiment of the invention.

FIG. 3A is a block diagram illustrating an exemplary usage model for a coexistence system that supports WLAN and Bluetooth radio operations, in accordance with an embodiment of the invention.

FIG. 3B is a block diagram illustrating an exemplary usage model for a coexistence system that supports WLAN and cellular radio operations, in accordance with an embodiment of the invention.

FIG. 3C is a block diagram illustrating an exemplary usage model for a coexistence system that supports cellular and Bluetooth radio operations, in accordance with an embodiment of the invention.

FIG. 3D is a block diagram illustrating an exemplary usage model for a coexistence system that supports ZigBee radio and one of cellular, Bluetooth and WLAN radio operations, in accordance with an embodiment of the invention.

FIG. 4A is a block diagram illustrating another embodiment of an exemplary usage model for a coexistence system that supports WLAN and Bluetooth radio operations, in accordance with an embodiment of the invention.

FIG. 4B is a block diagram illustrating another embodiment of an exemplary usage model for a coexistence system that supports WLAN and cellular radio operations, in accordance with an embodiment of the invention.

FIG. 4C is a block diagram illustrating another embodiment of an exemplary usage model for a coexistence system that supports cellular and Bluetooth radio operations, in accordance with an embodiment of the invention.

FIG. 4D is a block diagram illustrating another embodiment of an exemplary usage model for a coexistence system that supports ZigBee radio and one of cellular, Bluetooth and WLAN radio operations, in accordance with an embodiment of the invention.

### DETAILED DESCRIPTION OF THE INVENTION

Certain embodiments of the invention may be found in a method and system for utilizing polarized antennas in coexistence systems. Certain aspects of the invention may comprise a coexistence system that includes a first communication device and a second communication device that communicate data utilizing a first polarized antenna and a second antenna that is orthogonally polarized with respect to the first polarized antenna. The communication devices may be enabled to handle, for example, Bluetooth (BT) protocol data, Wireless Local Area Network (WLAN) protocol data and cellular protocol data.

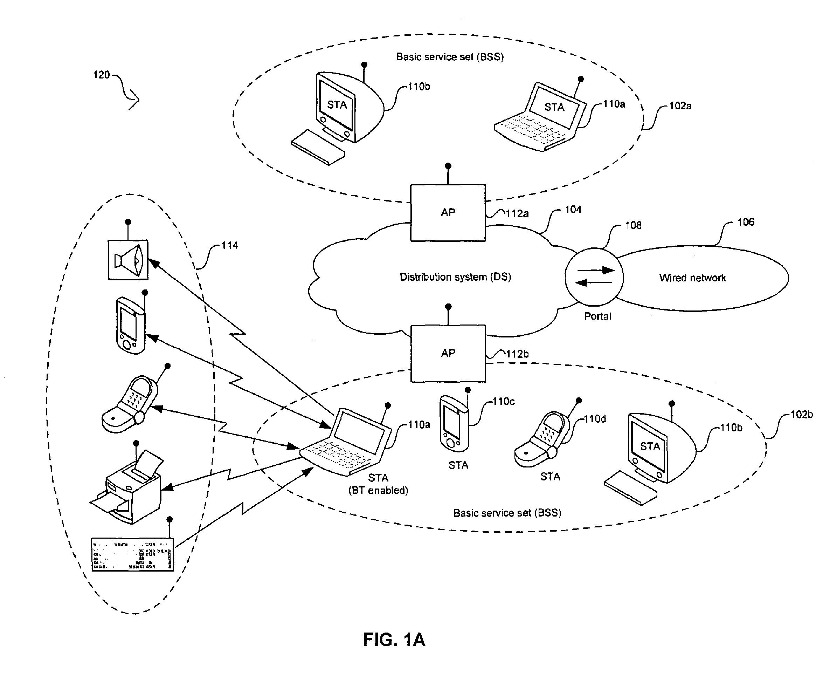

FIG. 1A is a block diagram of an exemplary WLAN infrastructure network comprising a basic service set (BSS) with stations that support WLAN/Bluetooth coexistence, in accordance with an embodiment of the invention. Referring to FIG. 1A, the exemplary WLAN infrastructure network 120 may comprise a first BSS 102a, a second BSS 102b, a distribution system (DS) 104, a wired network 106, a portal 108, a first access point (AP) 112a, a second AP 112b, and a plurality of WLAN stations (STAs). The BSSs 102a and 102b may represent a fundamental building block of the IEEE 802.11 (WLAN) architecture and may be defined as a group of stations (STAs) that are under the direct control of a single coordination function. The geographical area covered by a BSS is known as the basic service area (BSA). The DS 104 may be utilized to integrate the BSSs 102a and 102b and may comprise suitable logic, circuitry, and/or code that may be enabled to operate as a backbone network that is responsible for Medium Access Control (MAC) level transport in the WLAN infrastructure network 100. The DS 104, as specified by the IEEE 802.11 standard, may be implementation independent. For example, the DS 104 may be implemented utilizing IEEE 802.3 Ethernet Local Area Network (LAN), IEEE 802.4 token bus LAN, IEEE 802.5 token ring LAN, Fiber Distributed Data Interface (FDDI) Metropolitan Area Network (MAN), or another IEEE 802.11 wireless medium. The DS 104 may be implemented utilizing the same physical medium as either the first BSS 102a or the second BSS 102b. However, the DS 104 may be logically different from the BSSs and may be utilized only to transfer data between the BSSs and/or to transfer data between the BSSs and the wired network 106.

The wired network 106 may comprise suitable logic, circuitry, and/or code that may be enabled to provide wired networking operations. The wired network 106 may be accessed from the WLAN infrastructure network 120 via the portal 108. The portal 108 may comprise suitable logic, circuitry, and/or code and may be enabled to integrate the WLAN infrastructure network 120 with non-IEEE 802.11 networks. Moreover, the portal 108 may also be enabled to perform the functional operations of a bridge, such as range extension and/or translation between different frame formats, in order to integrate the WLAN infrastructure network 120 with IEEE 802.11-based networks.

The APs 112a and 112b may comprise suitable logic, circuitry, and/or code that may be enabled to support range extension of the WLAN infrastructure network 120 by providing the integration points necessary for network connectivity between the BSSs. The STA 110a and the STA 110b may correspond to WLAN-enabled terminals that comprise suitable logic, circuitry, and/or code that may be enabled to provide connectivity to the WLAN infrastructure network 120 via the APs. The STA 110a shown may be a laptop computer and may correspond to a mobile station or terminal within the BSS and the STA 110b shown may be a desktop computer and may correspond to a fixed or stationary terminal within the BSS. Each BSS may comprise a plurality of mobile or fixed stations and may not be limited to the exemplary implementation shown in FIG. 1A.

The second BSS 102b may comprise additional mobile terminals or stations such as a Personal Digital Assistant (PDA) 110c and a mobile phone 110d and the laptop computer 110a may be Bluetooth-enabled. The peripheral devices 114 shown may be part of the Wireless Personal Area Network (WPAN) supported by the Bluetooth-enabled laptop computer. For example, the laptop computer 110a may communicate via Bluetooth technology with a keyboard, a mouse, a printer, a mobile phone, a PDA, and/or a set of headphones or speakers, where these devices and the laptop computer 110a may form an ad-hoc Bluetooth piconet. Generally, a Bluetooth piconet may comprise a master device or terminal and up to seven slave devices or terminals. In this exemplary implementation, the laptop computer 110a may correspond to the master Bluetooth terminal and the peripheral devices 114 may correspond to the slave Bluetooth terminals.

The Bluetooth-enabled laptop computer 110a may comprise a WLAN radio device and a Bluetooth radio device that allows it to communicate with the WLAN infrastructure network 100 via the AP 112b and with the Bluetooth piconet respectively. Because of the size of the laptop computer 110a, locating the WLAN and BT radio devices in the same terminal may result in signal interference between WLAN and BT communications. When the PDA 110c and/or the mobile phone 110d are Bluetooth-enabled, the small form factor of these coexistence terminals may result in a small radio frequency (RF) path loss between WLAN and BT radio devices and likely interference between WLAN and BT communications.

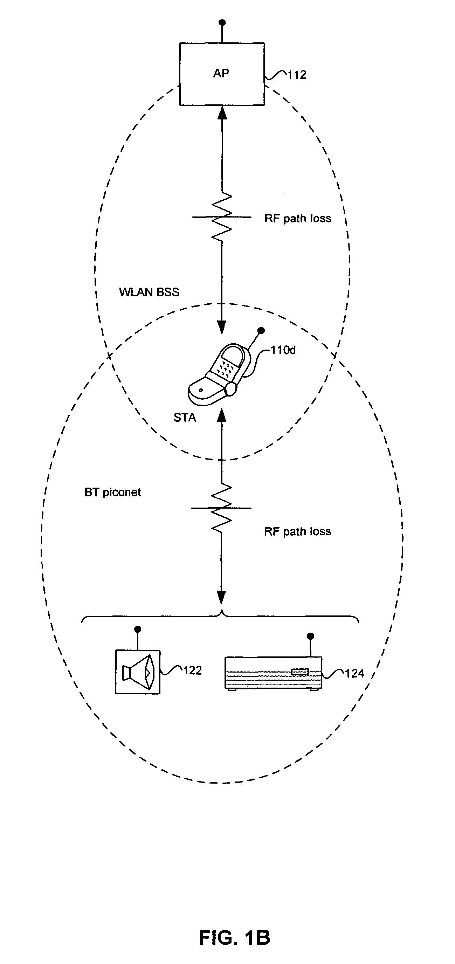

FIG. 1B is a block diagram that illustrates an exemplary usage model for a coexistence terminal with collocated WLAN and Bluetooth radio devices, in accordance with an embodiment of the invention. Referring to FIG. 1 B, the mobile phone 110d may comprise a WLAN radio device to communicate with the AP 112c. The mobile phone 110d may also be Bluetooth-enabled and may comprise a Bluetooth radio device to communicate with, for example, a Bluetooth headset 122 and/or a home gateway 124 with Bluetooth cordless telephony capability. Due to the small form factor of the mobile phone 110d, the WLAN and Bluetooth radio devices may be in such close proximity to each other within the same coexistence terminal that the isolation between them is sufficiently low to allow desensitization of one radio device by the other's transmissions.

The Bluetooth-enabled mobile phone 110d may comprise two maximum transmission power levels. For example, the mobile phone 110d may operate as a Class 1 power level terminal with a maximum transmission power of 20 dBm to communicate with the home gateway 124. In another example, the mobile phone 110d may operate as a Class 2 power level terminal with a maximum transmission power of 4 dBm to communicate with the Bluetooth headset 122. The Bluetooth headset 122 may comprise suitable logic, circuitry, and/or code that may be enabled to receive and/or transmit audio information. For example, the Bluetooth headset 122 may be enabled to receive and/or transmit Continuous Variable Slope Delta (CVSD) modulated voice from the mobile phone 110d or receive A2DP, such as MP3, from the mobile phone 110d. The home gateway 124 may comprise suitable logic, circuitry, and/or code that may be enabled to receive and/or transmit data and/or audio information. For example, the home gateway 124 may receive and/or transmit 64 kb/s CVSD modulated voice.

In operation, the mobile phone 110d may receive voice or audio content from the WLAN infrastructure network via the AP 112c and may communicate the voice or audio contents to the Bluetooth headset 122 or the voice contents to the home gateway 124. Similarly, the Bluetooth headset 122 the home gateway 124 may communicate voice contents to the Bluetooth-enabled mobile phone 110d which in turn may communicate the voice contents to other users through the WLAN infrastructure network.

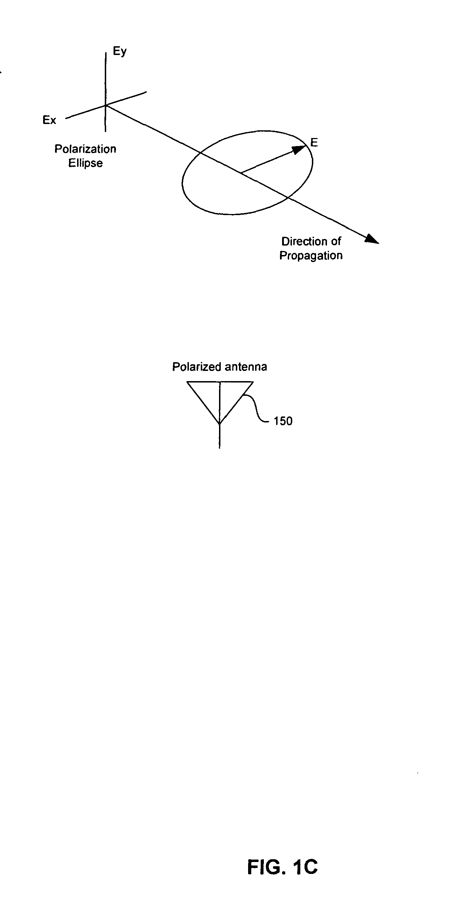

FIG. 1C is a diagram that illustrates antenna polarization in wireless communication systems, in accordance with an embodiment of the invention. Referring to FIG. 1C, there is shown a polarized antenna 150. The energy radiated by the polarized antenna 150 may be a transverse electromagnetic wave that comprises an electric field and a magnetic field. These fields are always orthogonal to one another and orthogonal to the direction of propagation. The electric field E of the electromagnetic wave may be utilized to describe its polarization. The total electric field of the electromagnetic wave may comprise two linear components, which are orthogonal to one another. Each of these components may have a different magnitude and phase. At any fixed point along the direction of propagation, the total electric field may trace an ellipse as a function of time. For example, at any instant in time, Ex is the component of the electric field in the x-direction and Ey is the component of the electric field in the y-direction. The total electric field E, is the vector sum of Ex and Ey.

The elliptical polarization may comprise two cases, for example, circular polarization and linear polarization. A circularly polarized electromagnetic wave may comprise two linearly polarized electric field components that are orthogonal, have equal amplitude and may be 90 degrees out of phase. In this case, the polarization ellipse traced by the wave is a circle. Depending upon the direction of rotation of the circularly polarized wave, the wave may be left hand circularly polarized or right hand circularly polarized. The phase relationship between the two orthogonal components, +90 degrees or -90 degrees, determines the direction of rotation. A linearly polarized electromagnetic wave may comprise a single electric field component and the polarization ellipse traced by the wave is a straight line.

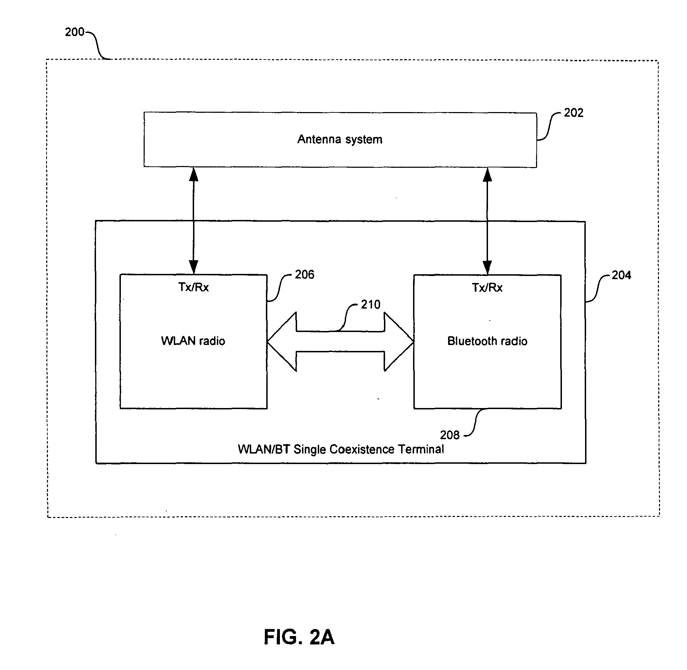

FIG. 2A is a block diagram that illustrates an exemplary coexistence system that supports WLAN and Bluetooth radio operations, in accordance with an embodiment of the invention. Referring to FIG. 2A, there is shown a mobile phone 200 that may comprise a WLAN/Bluetooth coexistence antenna system 202 and a WLAN/Bluetooth (WLAN/BT) radio device 204. The WLAN/BT radio device 204 may comprise a WLAN radio portion 206 and a Bluetooth radio portion 208. The WLAN/BT radio device 204 may be implemented using a system-on-chip (SOC) architecture, for example.

The WLAN/Bluetooth coexistence antenna system 202 may comprise suitable logic, and/or circuitry that may be enabled to provide WLAN and Bluetooth communication between external devices and a coexistence terminal. The WLAN/Bluetooth coexistence antenna system 202 may comprise at least one antenna for the transmission and reception of WLAN and Bluetooth packet traffic.

The WLAN radio portion 206 may comprise suitable logic, circuitry, and/or code that may be enabled to process WLAN protocol data for communication. The WLAN radio portion 206 may be enabled to transfer and/or receive WLAN protocol data and/or information to the WLAN/Bluetooth coexistence antenna system 202 via a single transmit/receive (Tx/Rx) port. In some instances, the transmit port (Tx) may be implemented separately from the receive port (Rx). The WLAN radio portion 206 may also be enabled to generate signals that control at least a portion of the operation of the WLAN/Bluetooth coexistence antenna system 202. Firmware operating in the WLAN radio portion 206 may be utilized to schedule and/or control WLAN packet communication, for example.

The WLAN radio portion 206 may also be enabled to receive and/or transmit priority signals 210. The priority signals 210 may be utilized to schedule and/or control the collaborative operation of the WLAN radio portion 206 and the Bluetooth radio portion 208. In this regard, the priority signals 210 may comprise a plurality of signals to implement various levels of transmission priority. For example, a single signal implementation may result in two transmission priority levels, a two-signal implementation may result in up to four different transmission priority levels, and a three-signal implementation may result in up to eight different transmission priority levels.

The Bluetooth radio portion 208 may comprise suitable logic, circuitry, and/or code that may be enabled to process Bluetooth protocol data for communication. The Bluetooth radio portion 208 may be enabled to transfer and/or receive Bluetooth protocol data and/or information to and/or from respectively, the WLAN/Bluetooth coexistence antenna system 202 via a single transmit/receive (Tx/Rx) port. In some instances, the transmit port (Tx) may be implemented separately from the receive port (Rx). The Bluetooth radio portion 208 may also be enabled to generate signals that control at least a portion of the operation of the WLAN/Bluetooth coexistence antenna system 202. Firmware operating in the Bluetooth radio portion 208 may be utilized to schedule and/or control Bluetooth packet communication. The Bluetooth radio portion 208 may also be enabled to receive and/or transmit priority signals 210. A portion of the operations supported by the WLAN radio portion 206 and a portion of the operations supported by the Bluetooth radio portion 208 may be performed by common logic, circuitry, and/or code.

In some instances, at least a portion of either the WLAN radio portion 206 or the Bluetooth radio portion 208 may be disabled and the wireless terminal may operate in a single-communication mode, that is, coexistence may be disabled. When at least a portion of the WLAN radio portion 206 is disabled, the WLAN/Bluetooth coexistence antenna system 202 may utilize a default configuration to support Bluetooth communication. When at least a portion of the Bluetooth radio portion 208 is disabled, the WLAN/Bluetooth coexistence antenna system 202 may utilize a default configuration to support WLAN communication.

Packet communication between the WLAN/Bluetooth coexistence antenna system 202 and the WLAN/Bluetooth (WLAN/BT) radio device 204 may take place via a radio front-end topology in the WLAN/Bluetooth (WLAN/BT) radio device 204. The radio front-end topology may be implemented partially in the WLAN radio portion 206 and/or partially in the Bluetooth radio portion 208, for example.

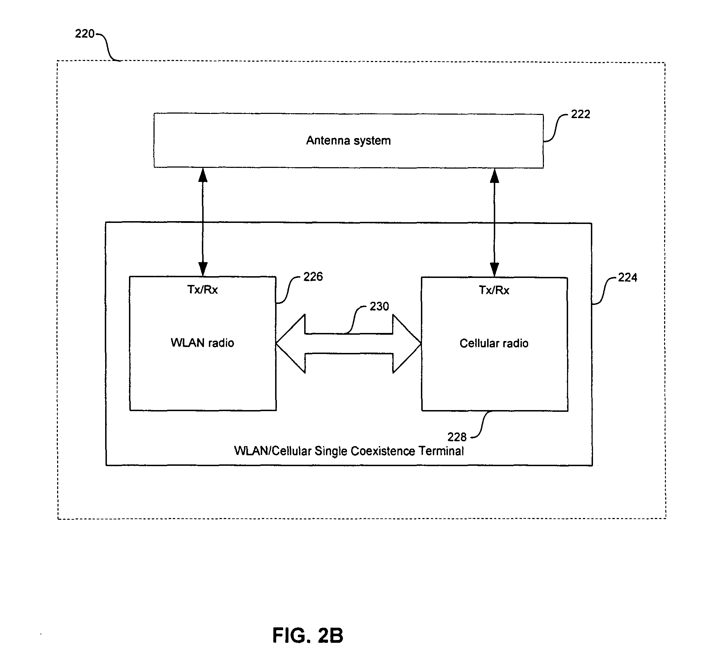

FIG. 2B is a block diagram that illustrates an exemplary coexistence system that supports WLAN and cellular radio operations, in accordance with an embodiment of the invention. Referring to FIG. 2B, there is shown a mobile phone 220 that may comprise a WLAN/cellular coexistence antenna system 222 and a WLAN/cellular (WLAN/cellular) radio device 224. The WLAN/cellular radio device 224 may comprise a WLAN radio portion 206 and a cellular radio portion 228. The WLAN/cellular radio device 224 may be implemented based on a system-on-chip (SOC) architecture, for example.

The WLAN/cellular coexistence antenna system 222 may comprise suitable logic, and/or circuitry that may be enabled to provide WLAN and cellular communication between external devices and a coexistence terminal. The WLAN/cellular coexistence antenna system 222 may comprise at least one antenna for the transmission and reception of WLAN and cellular packet traffic.

The WLAN radio portion 226 may be substantially as described in FIG. 2A. The cellular radio portion 228 may comprise suitable logic, circuitry; and/or code that may be enabled to process cellular protocol data, for example, global system for mobile communication (GSM) data, or code division multiple access (CDMA) data for communication. The cellular radio portion 228 may be enabled to transfer and/or receive cellular protocol data and/or information to the WLAN/cellular coexistence antenna system 222 via a single transmit/receive (Tx/Rx) port. In some instances, the transmit port (Tx) may be implemented separately from the receive port (Rx). The cellular radio portion 228 may also be enabled to generate signals that control at least a portion of the operation of the WLAN/cellular coexistence antenna system 222. Firmware operating in the cellular radio portion 228 may be utilized to schedule and/or control cellular packet communication. The cellular radio portion 228 may also be enabled to receive and/or transmit priority signals 230. A portion of the operations supported by the WLAN radio portion 226 and a portion of the operations supported by the cellular radio portion 228 may be performed by common logic, circuitry, and/or code.

In some instances, at least a portion of either the WLAN radio portion 226 or the cellular radio portion 228 may be disabled and the wireless terminal may operate in a single-communication mode; that is, coexistence may be disabled. When at least a portion of the WLAN radio portion 226 is disabled, the WLAN/cellular coexistence antenna system 222 may utilize a default configuration to support cellular communication. When at least a portion of the cellular radio portion 228 is disabled, the WLAN/cellular coexistence antenna system 222 may utilize a default configuration to support WLAN communication.

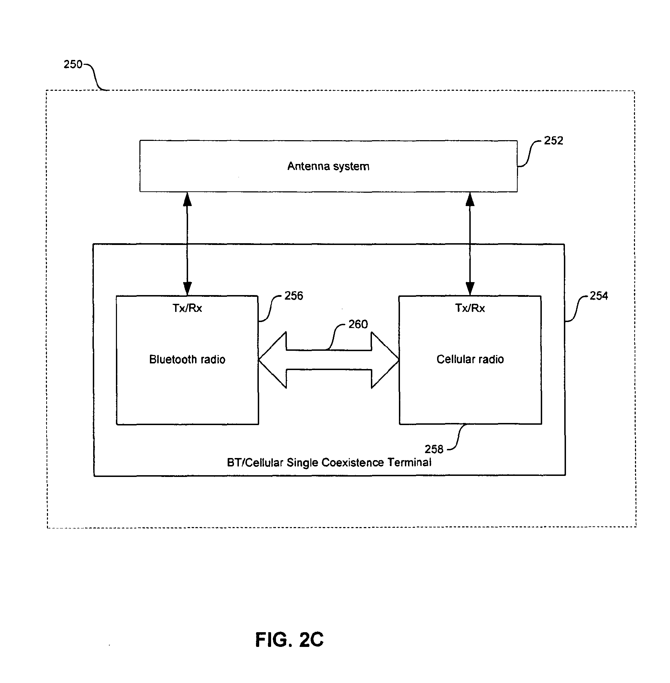

FIG. 2C is a block diagram that illustrates an exemplary coexistence system that supports cellular and Bluetooth radio operations, in accordance with an embodiment of the invention. Referring to FIG. 2C, there is shown a mobile phone 250 that may comprise a Bluetooth/cellular coexistence antenna system 252 and a Bluetooth/cellular (BT/cellular) radio device 254. The BT/cellular radio device 254 may comprise a cellular radio portion 258 and a Bluetooth radio portion 256. The BT/cellular radio device 254 may be implemented based on a system-on-chip (SOC) architecture, for example.

The BT/cellular coexistence antenna system 252 may comprise suitable logic, and/or circuitry that may be enabled to provide cellular and Bluetooth communication between external devices and a coexistence terminal. The BT/cellular coexistence antenna system 252 may comprise at least one antenna for the transmission and reception of cellular and Bluetooth packet traffic.

The cellular radio portion 258 may comprise suitable logic, circuitry, and/or code that may be enabled to process cellular protocol data, for example, GSM data, or CDMA data for communication. The cellular radio portion 258 may be enabled to transfer and/or receive cellular protocol data and/or information to the BT/cellular coexistence antenna system 252 via a single transmit/receive (Tx/Rx) port. In some instances, the transmit port (Tx) may be implemented separately from the receive port (Rx). The cellular radio portion 258 may also be enabled to generate signals that control at least a portion of the operation of the BT/cellular coexistence antenna system 252. Firmware operating in the cellular radio portion 258 may be utilized to schedule and/or control cellular packet communication, for example.

The cellular radio portion 258 may also be enabled to receive and/or transmit priority signals 260. The priority signals 260 may be utilized to schedule and/or control the collaborative operation of the cellular radio portion 258 and the Bluetooth radio portion 256. In this regard, the priority signals 260 may comprise a plurality of signals to implement various levels of transmission priority. For example, a single signal implementation may result in two transmission priority levels, a two-signal implementation may result in up to four different transmission priority levels, and a three-signal implementation may result in up to eight different transmission priority levels.

The Bluetooth radio portion 256 may be substantially as described in FIG. 2A. In some instances, the transmit port (Tx) may be implemented separately from the receive port (Rx). The Bluetooth radio portion 256 may also be enabled to generate signals that control at least a portion of the operation of the BT/cellular coexistence antenna system 252. Firmware operating in the Bluetooth radio portion 256 may be utilized to schedule and/or control Bluetooth packet communication. The Bluetooth radio portion 256 may also be enabled to receive and/or transmit priority signals 260. A portion of the operations supported by the cellular radio portion 258 and a portion of the operations supported by the Bluetooth radio portion 256 may be performed by common logic, circuitry, and/or code. In some instances, at least a portion of either the cellular radio portion 258 or the Bluetooth radio portion 256 may be disabled and the wireless terminal may operate in a single-communication mode, that is, coexistence may be disabled. When at least a portion of the cellular radio portion 258 is disabled, the BT/cellular coexistence antenna system 252 may utilize a default configuration to support Bluetooth communication. When at least a portion of the Bluetooth radio portion 256 is disabled, the BT/cellular coexistence antenna system 252 may utilize a default configuration to support cellular communication.

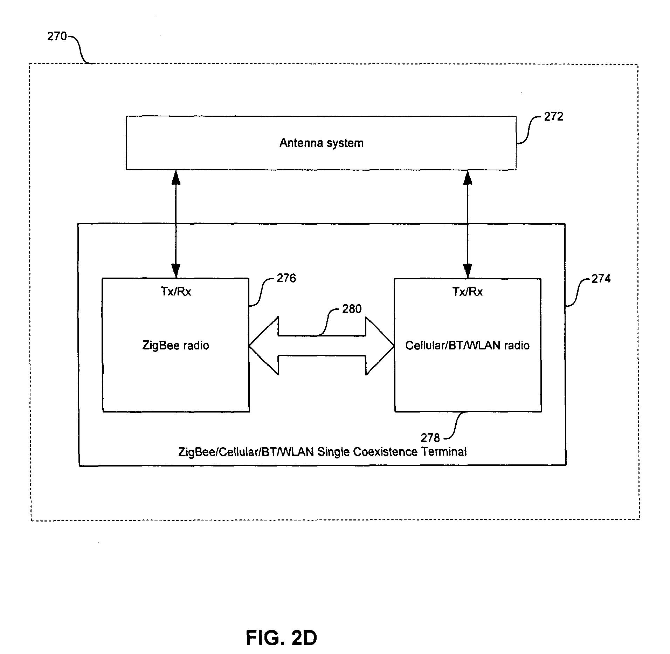

FIG. 2D is a block diagram that illustrates an exemplary coexistence system that supports ZigBee radio and one of cellular, Bluetooth and WLAN radio operations, in accordance with an embodiment of the invention. Referring to FIG. 2D, there is shown a mobile phone 270 that may comprise a ZigBee/cellular/BT/WLAN coexistence antenna system 272 and a ZigBee/cellular/BT/WLAN radio device 274. The ZigBee/cellular/BT/WLAN radio device 254 may comprise a ZigBee radio portion 276 and at least one of: a cellular, a Bluetooth, and a WLAN (cellular/BT/WLAN) radio portion 278. The ZigBee/cellular/BT/WLAN radio device 274 may be implemented based on a system-on-chip (SOC) architecture, for example.

The ZigBee/cellular/BT/WLAN coexistence antenna system 272 may comprise suitable logic, and/or circuitry that may be enabled to provide ZigBee and at least one of: cellular, Bluetooth, and WLAN communication between external devices and a coexistence terminal. The ZigBee/cellular/BT/WLAN coexistence antenna system 272 may comprise at least one antenna for the transmission and reception of ZigBee and at least one of: cellular, Bluetooth, and WLAN packet traffic.

The ZigBee radio portion 276 may comprise suitable logic, circuitry, and/or code that may be enabled to process ZigBee protocol data for communication. ZigBee is a wireless networking standard that may be described by the IEEE standard 802.15.4, which defines the physical and MAC layers. The ZigBee protocol may define the application and security layer specifications enabling interoperability between products from different manufacturers. The ZigBee protocol may enable embedded applications that may require low data rates and low power consumption.

The ZigBee radio portion 276 may be enabled to transfer and/or receive ZigBee protocol data and/or information to the ZigBee/cellular/BT/WLAN coexistence antenna system 272 via a single transmit/receive (Tx/Rx) port. In some instances, the transmit port (Tx) may be implemented separately from the receive port (Rx). The ZigBee radio portion 276 may also be enabled to generate signals that control at least a portion of the operation of the ZigBee/cellular/BT/WLAN coexistence antenna system 272. Firmware operating in the ZigBee radio portion 276 may be utilized to schedule and/or control ZigBee packet communication, for example.

The ZigBee radio portion 276 may also be enabled to receive and/or transmit priority signals 280. The priority signals 280 may be utilized to schedule and/or control the collaborative operation of the ZigBee radio portion 276 and the cellular/BT/WLAN radio portion 278. In this regard, the priority signals 280 may comprise a plurality of signals to implement various levels of transmission priority. For example, a single signal implementation may result in two transmission priority levels, a two-signal implementation may result in up to four different transmission priority levels, and a three-signal implementation may result in up to eight different transmission priority levels. The cellular/BT/WLAN radio portion 278 may be substantially as described in FIG. 2A, FIG. 2B, and FIG. 2C.

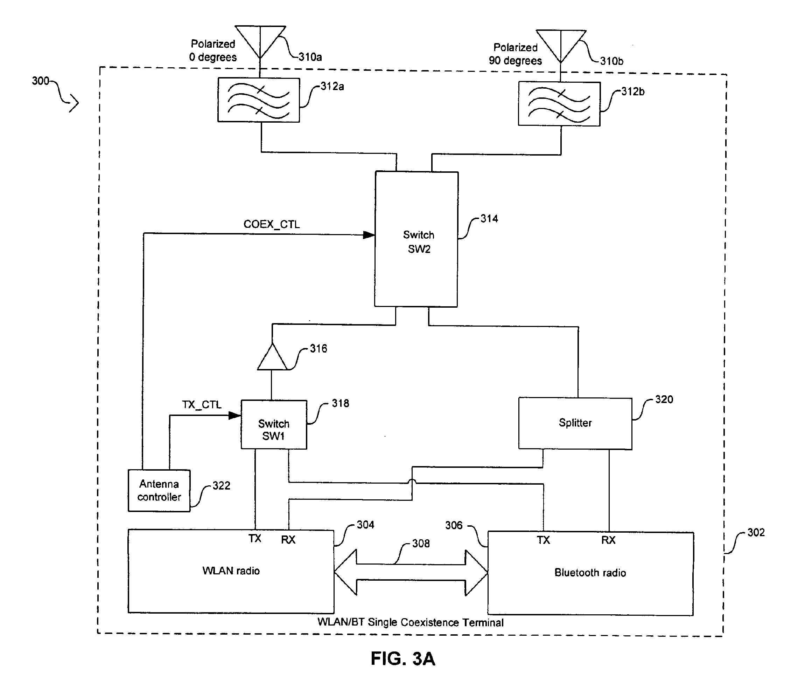

FIG. 3A is a block diagram illustrating an exemplary usage model for a coexistence system that supports WLAN and Bluetooth radio operations, in accordance with an embodiment of the invention. Referring to FIG. 3A, the WLAN/Bluetooth collaborative radio architecture 300 may comprise a plurality of antennas, for example, antenna 1 310a and antenna 2 310b, and a WLAN/Bluetooth (WLAN/BT) coexistence terminal 302. The WLAN/BT coexistence terminal 302 may comprise a plurality of bandpass filters, for example, bandpass filters 312a and 312b, a first antenna switch (SW1) 318, a second antenna switch (SW2) 314, a power amplifier (PA) 316, a splitter 320, an antenna controller 322, a WLAN radio portion 304 and a Bluetooth radio portion 306.

The plurality of antennas, antenna 1 310a and antenna 2 310b may comprise suitable logic, circuitry, and/or code that may be enabled to provide transmission and reception of Bluetooth and WLAN communication. In this regard, the plurality of antennas, antenna 1 310a and antenna 2 310b may be utilized for transmission and reception of a plurality of communication protocols. Antenna 1 310a may be polarized with a zero degree polarization angle, for example. Antenna 2 310b may be orthogonally polarized with respect to antenna 1 310a, and may have a 90 degree polarization angle. The plurality of antennas, antenna 1 310a and antenna 2 310b may be configured so as to provide isolation in space and time. The polarized antennas, antenna 1 310a and antenna 2 310b may enable reduction of space between the antennas and may provide isolation. The bandpass filters 312a and 312b may comprise suitable logic, and/or circuitry that may be enabled to perform bandpass filtering on communication signals. The bandpass filters 312a and 312b may be implemented by utilizing a polyphase filter, for example. The bandpass filters 312a and 312b may be configured to conform to the bandpass requirements for the ISM band.

The SW1 318 and the SW2 314 may comprise suitable logic, circuitry, and/or code that may be enabled to select from signals at two input ports, one that may be connected to an output port. The SW1 318 and SW2 314 may be implemented by utilizing, for example, single pull double throw (SPDT) switching devices or by utilizing a multiplexer (MUX), for example. The selection operation of the SW1 318 may be controlled by a control signal such as a transmission control (TX_CTL) signal generated by the antenna controller 322. The selection operation of the SW2 314 may be controlled by a control signal such as the coexistence control (COEX_CTL) signal generated by the antenna controller 322. The SW2 314 may be enabled to switch between the plurality of antennas, antenna 1 310a and antenna 2 310b alternately in order to receive communication signals from the plurality of antennas. The SW2 314 may also be enabled to switch between a transmit operation or a receive operation within the WLAN/BT coexistence terminal 302.

The WLAN radio portion 304 in the WLAN/BT coexistence terminal 302 may comprise suitable logic, circuitry, and/or code that may be enabled to process WLAN protocol data for communication. The antenna controller 322 may comprise suitable logic, circuitry, and/or code that may be enabled to generate at least the TX_CTL and/or COEX_CTL control signals for configuring the station to receive and/or transmit WLAN and/or Bluetooth data. As shown, the WLAN radio portion 304 may comprise separate ports for transmission (Tx) and reception (Rx) of WLAN packet traffic. However, a single TX/RX port may also be utilized for WLAN communication. The WLAN radio portion 304 may be enabled to generate and/or receive at least one priority signal 308 for controlling and/or scheduling collaborative communication with the Bluetooth radio portion 306.

The Bluetooth radio portion 306 may comprise suitable logic, circuitry, and/or code that may be enabled to process Bluetooth protocol data for communication. As shown, the Bluetooth radio portion 306 may comprise separate ports for transmission (Tx) and reception (Rx) of Bluetooth packet traffic. However, a single TX/RX port may also be utilized for Bluetooth communication. The Bluetooth radio portion 306 may be enabled to generate and/or receive at least one priority signal 308 for controlling and/or scheduling collaborative communication with the WLAN radio portion 304.

In accordance with an embodiment of the invention, the plurality of antennas, antenna 1 310a and antenna 2 310b may be enabled to transmit data simultaneously. For example, antenna 1 310a may be enabled to transmit BT protocol data and may be polarized at zero degrees while antenna 2 310b may be enabled to transmit WLAN protocol data and may be polarized orthogonally with respect to antenna 1 310a. For example, antenna 2 310b may be polarized at 90 degrees and may be simultaneously transmitting WLAN protocol data. Notwithstanding, antenna 1 310a may be enabled to transmit WLAN protocol data and may be polarized at zero degrees, for example, while antenna 2 310b may be enabled to transmit BT protocol data and may be polarized at 90 degrees.

In some instances, either WLAN communication or Bluetooth communication may be disabled and the station may not operate in a coexistence mode. When the WLAN communication is disabled, the SW1 318 and/or the SW2 314 may utilize a default configuration to support Bluetooth communication. When the Bluetooth communication is disabled, the SW1 318 and/or the SW2 314 may utilize a default configuration to support WLAN communication.

The splitter 320 may comprise suitable logic, and/or circuitry that may be enabled to split received communication data into a BT received data and a WLAN received data. The splitter 320 may be utilized to support separate Bluetooth reception and transmission paths and to reduce the need to arbitrate or schedule simultaneous Bluetooth and WLAN receptions. In some instances, another switch may be utilized to bypass the splitter 320 and reduce the implementation loss when operating in a WLAN-only or Bluetooth-only mode.

The PA 316 may comprise suitable logic, circuitry, and/or code that may be enabled to amplify Bluetooth and/or WLAN transmission signals. The PA 316 may provide, for example, a 20 dB gain and may be implemented on-chip or off-chip. In this regard, the PA 316 may be utilized to provide class 1 operations for Bluetooth transmissions.

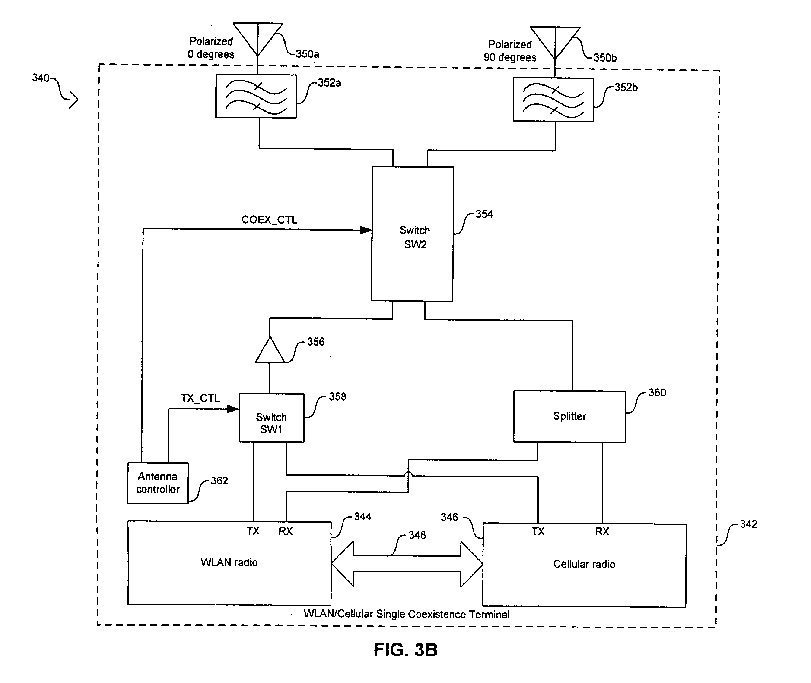

FIG. 3B is a block diagram illustrating an exemplary usage model for a coexistence system that supports WLAN and cellular radio operations with one antenna, in accordance with an embodiment of the invention. Referring to FIG. 3B, the WLAN/cellular collaborative radio architecture 340 may comprise a plurality of antennas, for example, antenna 1 350a and antenna 2 350b, and a WLAN/cellular (WLAN/cellular) coexistence terminal 342. The WLAN/cellular coexistence terminal 342 may comprise a plurality of bandpass filters, for example, bandpass filters 352a and 352b, a first antenna switch (SW1) 358, a second antenna switch (SW2) 354, a power amplifier (PA) 356, a splitter 360, an antenna controller 362, a WLAN radio portion 344 and a cellular radio portion 346.

The plurality of antennas, antenna 1 350a and antenna 2 350b may comprise suitable logic, circuitry, and/or code that may be enabled to provide transmission and reception of cellular and WLAN communication. In this regard, the plurality of antennas, antenna 1 350a and antenna 2 350b may be utilized for transmission and reception of a plurality of communication protocols. Antenna 1 350a may be polarized with a zero degree polarization angle, for example. Antenna 2 350b may be orthogonally polarized with respect to antenna 1 350a, and may have a 90 degree polarization angle. The plurality of antennas, antenna 1 350a and antenna 2 350b may be configured so as to provide isolation in space and time. The polarized antennas, antenna 1 350a and antenna 2 350b may enable reduction of space between the antennas and may provide isolation. The bandpass filters 352a and 352b may comprise suitable logic, and/or circuitry that may be enabled to perform bandpass filtering on communication signals. The bandpass filters 352a and 352b may be implemented by utilizing a polyphase filter, for example. The bandpass filters 352a and 352b may be configured to conform to the bandpass requirements for the ISM band.

The SW1 358 and the SW2 354 may comprise suitable logic, circuitry, and/or code that may be enabled to select from signals at two input ports, one that may be connected to an output port. The SW1 358 and SW2 354 may be implemented by utilizing, for example, single pull double throw (SPDT) switching devices or by utilizing a multiplexer (MUX), for example. The selection operation of the SW1 358 may be controlled by a control signal such as a transmission control (TX_CTL) signal generated by the antenna controller 362. The selection operation of the SW2 354 may be controlled by a control signal such as the coexistence control (COEX_CTL) signal generated by the antenna controller 362. The SW2 354 may be enabled to switch between the plurality of antennas, antenna 1 350a and antenna 2 350b alternately in order to receive communication signals from the plurality of antennas. The SW2 354 may also be enabled to switch between a transmit operation or a receive operation within the WLAN/cellular coexistence terminal 342.

The WLAN radio portion 344 in the WLAN/cellular coexistence terminal 342 may comprise suitable logic, circuitry, and/or code that may be enabled to process WLAN protocol data for communication. The antenna controller 362 may comprise suitable logic, circuitry, and/or code that may be enabled to generate at least the TX_CTL and/or COEX_CTL control signals for configuring the station to receive and/or transmit WLAN and/or cellular protocol data. As shown, the WLAN radio portion 344 may comprise separate ports for transmission (Tx) and reception (Rx) of WLAN packet traffic. However, a single TX/RX port may also be utilized for WLAN communication. The WLAN radio portion 344 may be enabled to generate and/or receive at least one priority signal 348 for controlling and/or scheduling collaborative communication with the cellular radio portion 346.

The cellular radio portion 346 may comprise suitable logic, circuitry, and/or code that may be enabled to process cellular protocol data, for example, GSM, or CDMA data for communication. As shown, the cellular radio portion 346 may comprise separate ports for transmission (Tx) and reception (Rx) of cellular packet traffic. However, a single TX/RX port may also be utilized for cellular communication. The cellular radio portion 346 may be enabled to generate and/or receive at least one priority signal 348 for controlling and/or scheduling collaborative communication with the WLAN radio portion 344.

In accordance with an embodiment of the invention, the plurality of antennas, antenna 1 350a and antenna 2 350b may be enabled to transmit data simultaneously. For example, antenna 1 350a may be enabled to transmit cellular protocol data and may be polarized at zero degrees while antenna 2 350b may be enabled to transmit WLAN protocol data and may be polarized orthogonally with respect to antenna 1 350a. For example, antenna 2 350b may be polarized at 90 degrees and may be simultaneously transmitting WLAN protocol data. Notwithstanding, antenna 1 350a may be enabled to transmit WLAN protocol data and may be polarized at zero degrees, for example, while antenna 2 350b may be enabled to transmit cellular protocol data and may be polarized at 90 degrees.

In some instances, either WLAN communication or cellular communication may be disabled and the station may not operate in a coexistence mode. When the WLAN communication is disabled, the SW1 358 and/or the SW2 354 may utilize a default configuration to support cellular communication. When the cellular communication is disabled, the SW1 358 and/or the SW2 354 may utilize a default configuration to support WLAN communication.

The splitter 360 may comprise suitable logic, and/or circuitry that may be enabled to split a received communication data into a cellular received data and a WLAN received data. The splitter 360 may be utilized to support separate cellular reception and transmission paths and to reduce the need to arbitrate or schedule simultaneous cellular and WLAN receptions. In some instances, another switch may be utilized to bypass the splitter 360 and reduce the implementation loss when operating in a WLAN-only or cellular-only mode. The PA 356 may comprise suitable logic, circuitry, and/or code that may be enabled to amplify cellular and/or WLAN transmission signals. The PA 356 may provide, for example, a 20 dB gain and may be implemented on-chip or off-chip.

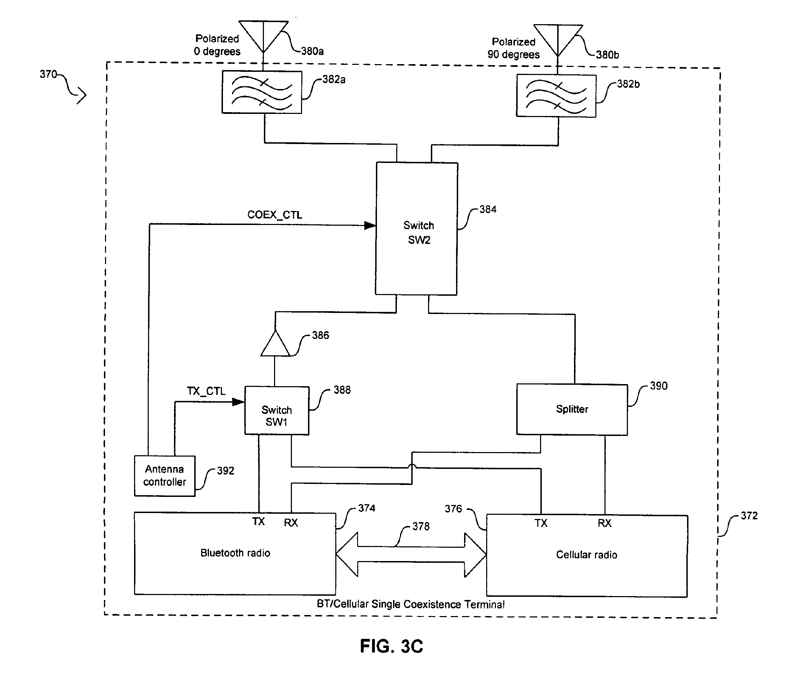

FIG. 3C is a block diagram illustrating an exemplary usage model for a coexistence system that supports cellular and Bluetooth radio operations with one antenna, in accordance with an embodiment of the invention. Referring to FIG. 3C, the Bluetooth/cellular collaborative radio architecture 370 may comprise a plurality of antennas, for example, antenna 1 380a and antenna 2 380b, and a Bluetooth/cellular (BT/cellular) coexistence terminal 372. The BT/cellular coexistence terminal 372 may comprise a plurality of bandpass filters, for example, bandpass filters 382a and 382b, a first antenna switch (SW1) 388, a second antenna switch (SW2) 384, a power amplifier (PA) 386, a splitter 390, an antenna controller 392, a cellular radio portion 374 and a Bluetooth radio portion 374.

The plurality of antennas, antenna 1 380a and antenna 2 380b may comprise suitable logic, circuitry, and/or code that may be enabled to provide transmission and reception of cellular and BT communication. In this regard, the plurality of antennas, antenna 1 380a and antenna 2 380b may be utilized for transmission and reception of a plurality of communication protocols. Antenna 1 380a may be polarized with a zero degree polarization angle, for example. Antenna 2 380b may be orthogonally polarized with respect to antenna 1 380a, and may have a 90 degree polarization angle. The plurality of antennas, antenna 1 380a and antenna 2 380b may be configured so as to provide isolation in space and/or time. The polarized antennas, antenna 1 380a and antenna 2 380b may enable reduction of space between the antennas and may provide isolation. The bandpass filters 382a and 382b may comprise suitable logic, and/or circuitry that may be enabled to perform bandpass filtering on communication signals. The bandpass filters 382a and 382b may be implemented by utilizing a polyphase filter, for example. The bandpass filters 382a and 382b may be configured to conform to the bandpass requirements for the ISM band.

The SW1 388 and the SW2 384 may comprise suitable logic, circuitry, and/or code that may be enabled to select from signals at two input ports, one that may be connected to an output port. The SW1 388 and SW2 384 may be implemented by utilizing, for example, single pull double throw (SPDT) switching devices or by utilizing a multiplexer (MUX), for example. The selection operation of the SW1 388 may be controlled by a control signal such as a transmission control (TX_CTL) signal generated by the antenna controller 392. The selection operation of the SW2 384 may be controlled by a control signal such as the coexistence control (COEX_CTL) signal generated by the antenna controller 392. The SW2 384 may be enabled to switch between the plurality of antennas, antenna 1 380a and antenna 2 380b alternately in order to receive communication signals from the plurality of antennas. The SW2 384 may also be enabled to switch between a transmit operation or a receive operation within the BT/cellular coexistence terminal 372.

The cellular radio portion 376 in the BT/cellular coexistence terminal 372 may comprise suitable logic, circuitry, and/or code that may be enabled to process cellular protocol data for communication. The antenna controller 392 may comprise suitable logic, circuitry, and/or code that may be enabled to generate at least the TX_CTL and/or COEX_CTL control signals for configuring the station to receive and/or transmit cellular and/or Bluetooth data. As shown, the cellular radio portion 376 may comprise separate ports for transmission (Tx) and/or reception (Rx) of cellular packet traffic. However, a single TX/RX port may also be utilized for cellular communication. The cellular radio portion 376 may be enabled to generate and/or receive at least one priority signal 378 for controlling and/or scheduling collaborative communication with the Bluetooth radio portion 374.

The Bluetooth radio portion 374 may comprise suitable logic, circuitry, and/or code that may be enabled to process Bluetooth protocol data for communication. As shown, the Bluetooth radio portion 374 may comprise separate ports for transmission (Tx) and reception (Rx) of Bluetooth packet traffic. However, a single TX/RX port may also be utilized for Bluetooth communication. The Bluetooth radio portion 374 may be enabled to generate and/or receive at least one priority signal 378 for controlling and/or scheduling collaborative communication with the cellular radio portion 376.

In accordance with an embodiment of the invention, the plurality of antennas, antenna 1 380a and antenna 2 380b may be enabled to transmit data simultaneously. For example, antenna 1 380a may be enabled to transmit cellular protocol data and may be polarized at zero degrees while antenna 2 380b may be enabled to transmit BT protocol data and may be polarized orthogonally with respect to antenna 1 380a. For example, antenna 2 380b may be polarized at 90 degrees and may be simultaneously transmitting BT protocol data. Notwithstanding, antenna 1 380a may be enabled to transmit BT protocol data and may be polarized at zero degrees, for example, while antenna 2 380b may be enabled to transmit cellular protocol data and may be polarized at 90 degrees.

In some instances, either cellular communication or Bluetooth communication may be disabled and the station may not operate in a coexistence mode. When the cellular communication is disabled, the SW1 388 and/or the SW2 384 may utilize a default configuration to support Bluetooth communication. When the Bluetooth communication is disabled, the SW1 388 and/or the SW2 384 may utilize a default configuration to support cellular communication.

The splitter 390 may comprise suitable logic, and/or circuitry that may be enabled to split a received communication data into a BT received data and a cellular received data. The splitter 390 may be utilized to support separate Bluetooth reception and transmission paths and to reduce the need to arbitrate or schedule simultaneous Bluetooth and cellular receptions. In some instances, another switch may be utilized to bypass the splitter 390 and reduce the implementation loss when operating in a cellular-only or Bluetooth-only mode. The PA 386 may comprise suitable logic, circuitry, and/or code that may be enabled to amplify Bluetooth and/or cellular transmission signals. The PA 386 may provide, for example, a 20 dB gain and may be implemented on-chip or off-chip. In this regard, the PA 386 may be utilized to provide class 1 operations for Bluetooth transmissions.

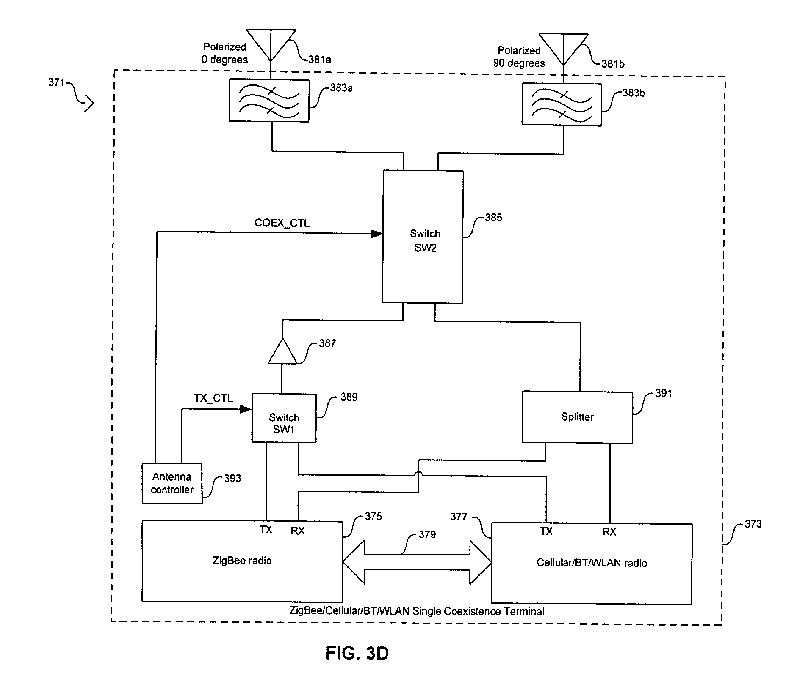

FIG. 3D is a block diagram illustrating an exemplary usage model for a coexistence system that supports ZigBee radio and one of cellular, Bluetooth and WLAN radio operations, in accordance with an embodiment of the invention. Referring to FIG. 3D, the ZigBee/cellular/BT/WLAN collaborative radio architecture 371 may comprise a plurality of antennas, for example, antenna 1 381 a and antenna 2 381 b, and a ZigBee/cellular/BT/WLAN coexistence terminal 372. The ZigBee/cellular/BT/WLAN coexistence terminal 373 may comprise a plurality of bandpass filters, for example, bandpass filters 383a and 383b, a first antenna switch (SW1) 389, a second antenna switch (SW2) 385, a power amplifier (PA) 387, a splitter 391, an antenna controller 393, a ZigBee radio portion 375 and at least one of: a cellular, a Bluetooth, and a WLAN (cellular/BT/WLAN) radio portion 377.

The plurality of antennas, antenna 1 381 a and antenna 2 381 b may comprise suitable logic, circuitry, and/or code that may be enabled to provide transmission and reception of ZigBee and at least one of: cellular, Bluetooth, and WLAN communication. In this regard, the plurality of antennas, antenna 1 381a and antenna 2 381b may be utilized for transmission and reception of a plurality of communication protocols. Antenna 1 381 a may be polarized with a zero degree polarization angle, for example. Antenna 2 381 b may be orthogonally polarized with respect to antenna 1 381a, and may have a 90 degree polarization angle. The plurality of antennas, antenna 1 381 a and antenna 2 381 b may be configured so as to provide isolation in space and/or time. The polarized antennas, antenna 1 381 a and antenna 2 381 b may enable reduction of space between the antennas and may provide isolation. The bandpass filters 383a and 383b may comprise suitable logic, and/or circuitry that may be enabled to perform bandpass filtering on communication signals. The bandpass filters 383a and 383b may be implemented by utilizing a polyphase filter, for example. The bandpass filters 383a and 383b may be configured to conform to the bandpass requirements for the ISM band.

The SW1 389 and the SW2 385 may comprise suitable logic, circuitry, and/or code that may be enabled to select from signals at two input ports, one that may be connected to an output port. The SW1 389 and SW2 385 may be implemented by utilizing, for example, single pull double throw (SPDT) switching devices or by utilizing a multiplexer (MUX), for example. The selection operation of the SW1 389 may be controlled by a control signal such as a transmission control (TX_CTL) signal generated by the antenna controller 393. The selection operation of the SW2 385 may be controlled by a control signal such as the coexistence control (COEX_CTL) signal generated by the antenna controller 393. The SW2 385 may be enabled to switch between the plurality of antennas, antenna 1 381a and antenna 2 381b alternately in order to receive communication signals from the plurality of antennas. The SW2 385 may also be enabled to switch between a transmit operation or a receive operation within the ZigBee/cellular/BT/WLAN coexistence terminal 373.

The ZigBee radio portion 375 in the ZigBee/cellular/BT/WLAN coexistence terminal 373 may comprise suitable logic, circuitry, and/or code that may be enabled to process ZigBee protocol data for communication. The antenna controller 393 may comprise suitable logic, circuitry, and/or code that may be enabled to generate at least the TX_CTL and/or COEX_CTL control signals for configuring the station to receive and/or transmit ZigBee protocol data and at least one of: cellular, Bluetooth, and WLAN protocol data. As shown, the ZigBee radio portion 375 may comprise separate ports for transmission (Tx) and/or reception (Rx) of ZigBee packet traffic. However, a single TX/RX port may also be utilized for ZigBee communication. The ZigBee radio portion 375 may be enabled to generate and/or receive at least one priority signal 379 for controlling and/or scheduling collaborative communication with the cellular/BT/WLAN radio portion 377. The cellular/BT/WLAN radio portion 377 may comprise suitable logic, circuitry, and/or code that may be enabled to process at least one of: cellular, Bluetooth, and WLAN protocol data for communication and may be substantially as described in FIG. 3A, FIG. 3B, and FIG. 3C.

In accordance with an embodiment of the invention, the plurality of antennas, antenna 1 381 a and antenna 2 381 b may be enabled to transmit data simultaneously. For example, antenna 1 381a may be enabled to transmit ZigBee protocol data and may be polarized at zero degrees while antenna 2 381 b may be enabled to transmit at least one of: cellular, BT, and WLAN protocol data and may be polarized orthogonally with respect to antenna 1 381a. For example, antenna 2 381 b may be polarized at 90 degrees and may be simultaneously transmitting at least one of: cellular, BT, and WLAN protocol data. Notwithstanding, antenna 1 381a may be enabled to transmit at least one of: cellular, BT, and WLAN protocol data and may be polarized at zero degrees, for example, while antenna 2 381 b may be enabled to transmit ZigBee protocol data and may be polarized at 90 degrees.

In some instances, either ZigBee communication or at least one of: cellular, BT, and WLAN communication may be disabled and the station may not operate in a coexistence mode. When the ZigBee communication is disabled, the SW1 389 and/or the SW2 385 may utilize a default configuration to support at least one of: cellular, BT, and WLAN protocol data communication. When the cellular/BT/WLAN communication is disabled, the SW1 389 and/or the SW2 385 may utilize a default configuration to support ZigBee communication.

The splitter 391 may comprise suitable logic, and/or circuitry that may be enabled to split a received communication data into a ZigBee received data and at least one of: cellular, BT, and WLAN received data. The splitter 391 may be utilized to support separate ZigBee/cellular/BT/WLAN reception and transmission paths and to reduce the need to arbitrate or schedule simultaneous ZigBee and cellular/BT/WLAN receptions. In some instances, another switch may be utilized to bypass the splitter 391 and reduce the implementation loss when operating in a ZigBee-only or cellular/BT/WLAN-only mode. The PA 387 may comprise suitable logic, circuitry, and/or code that may be enabled to amplify ZigBee and/or at least one of: cellular/BT/WLAN transmission signals. The PA 387 may provide, for example, a 20 dB gain and may be implemented on-chip or off-chip.

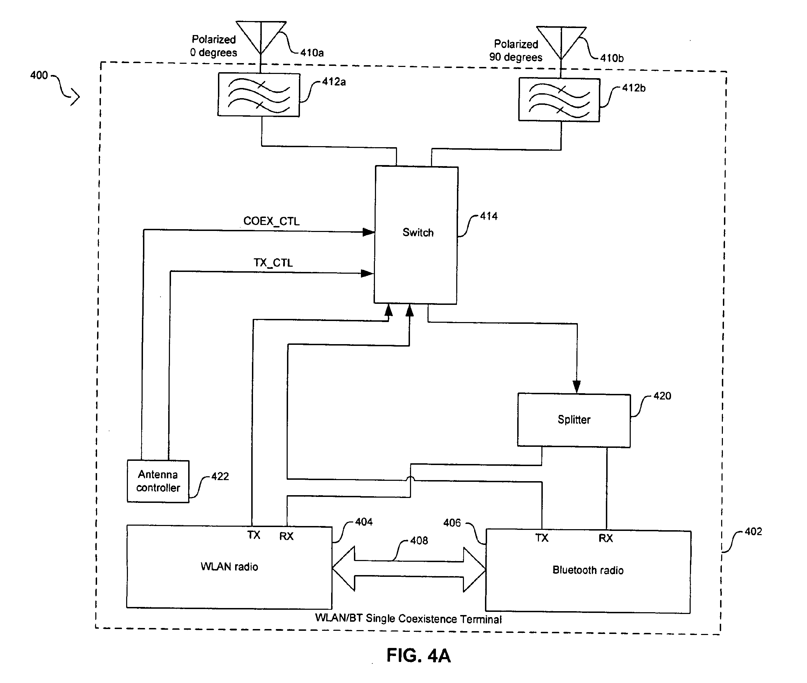

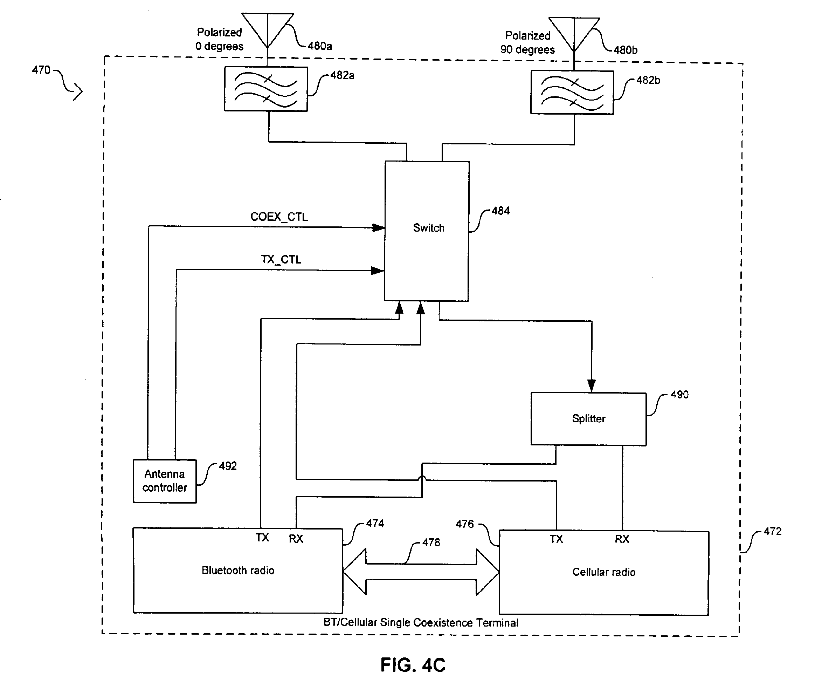

FIG. 4A is a block diagram illustrating another embodiment of an exemplary usage model for a coexistence system that supports WLAN and Bluetooth radio operations, in accordance with an embodiment of the invention. Referring to FIG. 4A, the WLAN/Bluetooth collaborative radio architecture 400 may comprise a plurality of antennas, for example, antenna 1 410a and antenna 2 410b, and a WLAN/Bluetooth (WLAN/BT) coexistence terminal 402. The WLAN/BT coexistence terminal 402 may comprise a plurality of bandpass filters, for example, bandpass filters 412a and 412b, a switch 414, a splitter 420, an antenna controller 422, a WLAN radio portion 404 and a Bluetooth radio portion 406.

The plurality of antennas, antenna 1 410a and antenna 2 410b may comprise suitable logic, circuitry, and/or code that may be enabled to provide transmission and reception of Bluetooth and WLAN communication. In this regard, the plurality of antennas, antenna 1 410a and antenna 2 410b may be utilized for transmission and reception of a plurality of communication protocols. Antenna 1 410a may be polarized with a zero degree polarization angle, for example. Antenna 2 410b may be orthogonally polarized with respect to antenna 1 410a, and may have a 90 degree polarization angle. The plurality of antennas, antenna 1 410a and antenna 2 410b may be configured so as to provide isolation in space and time. The polarized antennas, antenna 1 410a and antenna 2 410b may enable reduction of space between the antennas and may provide isolation. The plurality of blocks in FIG. 4A may be substantially as described in FIG. 3A.

The switch 414 may comprise suitable logic, circuitry, and/or code that may be enabled to select from a plurality of signals and output a selected plurality of signals. The switch 414 may be implemented by utilizing, for example, single pull double throw (SPDT) switching devices or by utilizing a multiplexer (MUX), for example. The selection operation of the switch 414 may be controlled by a plurality of control signals such as a transmission control (TX_CTL) signal and a coexistence control (COEX_CTL) signal generated by the antenna controller 422. The switch 414 may be enabled to switch between the plurality of antennas, antenna 1 410a and antenna 2 410b alternately in order to receive communication signals from the plurality of antennas. The switch 414 may be enabled to switch between a transmit operation or a receive operation within the WLAN/BT coexistence terminal 402. The switch 414 may also be enabled to switch between transmission of data from the WLAN radio portion 404 or from the BT radio portion 406. The switch 414 may also be enabled to allow simultaneous transmission of WLAN protocol data and BT protocol data utilizing the plurality of antennas, antenna 1 410a and antenna 2 410b.

In accordance with an embodiment of the invention, the plurality of antennas, antenna 1 410a and antenna 2 410b may be enabled to transmit data simultaneously. For example, antenna 1 410a may be enabled to transmit BT protocol data and may be polarized at zero degrees while antenna 2 410b may be enabled to transmit WLAN protocol data and may be polarized orthogonally with respect to antenna 1 410a. For example, antenna 2 410b may be polarized at 90 degrees and may be simultaneously transmitting WLAN protocol data. Notwithstanding, antenna 1 410a may be enabled to transmit WLAN protocol data and may be polarized at zero degrees, for example, while antenna 2 410b maybe enabled to transmit BT protocol data and may be polarized at 90 degrees.

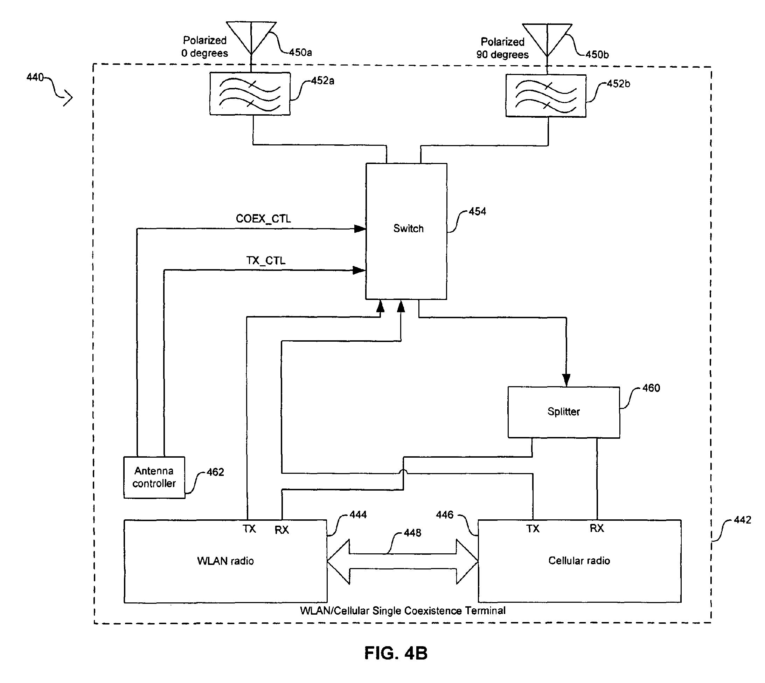

FIG. 4B is a block diagram illustrating another embodiment of an exemplary usage model for a coexistence system that supports WLAN and cellular radio operations, in accordance with an embodiment of the invention. Referring to FIG. 4B, the WLAN/cellular collaborative radio architecture 440 may comprise a plurality of antennas, for example, antenna 1 450a and antenna 2 450b, and a WLAN/cellular (WLAN/cellular) coexistence terminal 442. The WLAN/cellular coexistence terminal 442 may comprise a plurality of bandpass filters, for example, bandpass filters 452a and 452b, a switch 454, a splitter 460, an antenna controller 462, a WLAN radio portion 444 and a cellular radio portion 446.

The plurality of antennas, antenna 1 450a and antenna 2 450b may comprise suitable logic, circuitry, and/or code that may be enabled to provide transmission and reception of cellular and WLAN communication. In this regard, the plurality of antennas, antenna 1 450a and antenna 2 450b may be utilized for transmission and reception of a plurality of communication protocols. Antenna 1 450a may be polarized with a zero degree polarization angle, for example. Antenna 2 450b may be orthogonally polarized with respect to antenna 1 450a, and may have a 90 degree polarization angle. The plurality of antennas, antenna 1 450a and antenna 2 450b may be configured so as to provide isolation in space and time. The polarized antennas, antenna 1 450a and antenna 2 450b may enable reduction of space between the antennas and may provide isolation. The plurality of blocks in FIG. 4B may be substantially as described in FIG. 3B.

The switch 454 may comprise suitable logic, circuitry, and/or code that may be enabled to select from a plurality of signals and output a selected plurality of signals. The switch 454 may be implemented by utilizing, for example, single pull double throw (SPDT) switching devices or by utilizing a multiplexer (MUX), for example. The selection operation of the switch 454 may be controlled by a plurality of control signals such as a transmission control (TX_CTL) signal and a coexistence control (COEX_CTL) signal generated by the antenna controller 462. The switch 454 may be enabled to switch between the plurality of antennas, antenna 1 450a and antenna 2 450b alternately in order to receive communication signals from the plurality of antennas. The switch 454 may be enabled to switch between a transmit operation or a receive operation within the WLAN/cellular coexistence terminal 442. The switch 454 may also be enabled to switch between transmission of data from the WLAN radio portion 444 or from the cellular radio portion 446. The switch 454 may also be enabled to allow simultaneous transmission of WLAN protocol data and cellular protocol data utilizing the plurality of antennas, antenna 1 450a and antenna 2 450b.

In accordance with an embodiment of the invention, the plurality of antennas, antenna 1 450a and antenna 2 450b may be enabled to transmit data simultaneously. For example, antenna 1 450a may be enabled to transmit cellular protocol data and may be polarized at zero degrees while antenna 2 450b may be enabled to transmit WLAN protocol data and may be polarized orthogonally with respect to antenna 1 450a. For example, antenna 2 450b may be polarized at 90 degrees and may be simultaneously transmitting WLAN protocol data. Notwithstanding, antenna 1 450a may be enabled to transmit WLAN protocol data and may be polarized at zero degrees, for example, while antenna 2 450b may be enabled to transmit cellular protocol data and may be polarized at 90 degrees.

FIG. 4C is a block diagram illustrating another embodiment of an exemplary usage model for a coexistence system that supports cellular and Bluetooth radio operations, in accordance with an embodiment of the invention. Referring to FIG. 4C, the Bluetooth/cellular collaborative radio architecture 470 may comprise a plurality of antennas, for example, antenna 1 480a and antenna 2 480b, and a Bluetooth/cellular (BT/cellular) coexistence terminal 472. The BT/cellular coexistence terminal 472 may comprise a plurality of bandpass filters, for example, bandpass filters 482a and 482b, a switch 484, a splitter 490, an antenna controller 492, a cellular radio portion 474 and a Bluetooth radio portion 474.

The plurality of antennas, antenna 1 480a and antenna 2 480b may comprise suitable logic, circuitry, and/or code that may be enabled to provide transmission and reception of Bluetooth and cellular communication. In this regard, the plurality of antennas, antenna 1 480a and antenna 2 480b may be utilized for transmission and reception of a plurality of communication protocols. Antenna 1 480a may be polarized with a zero degree polarization angle, for example. Antenna 2 480b may be orthogonally polarized with respect to antenna 1 480a, and may have a 90 degree polarization angle. The plurality of antennas, antenna 1 480a and antenna 2 480b may be configured so as to provide isolation in space and time. The polarized antennas, antenna 1 480a and antenna 2 480b may enable reduction of space between the antennas and may provide isolation. The plurality of blocks in FIG. 4C may be substantially as described in FIG. 3C.

The switch 484 may comprise suitable logic, circuitry, and/or code that may be enabled to select from a plurality of signals and output a selected plurality of signals. The switch 484 may be implemented by utilizing, for example, single pull double throw (SPDT) switching devices or by utilizing a multiplexer (MUX), for example. The selection operation of the switch 484 may be controlled by a plurality of control signals such as a transmission control (TX_CTL) signal and a coexistence control (COEX_CTL) signal generated by the antenna controller 492. The switch 484 may be enabled to switch between the plurality of antennas, antenna 1 480a and antenna 2 480b alternately in order to receive communication signals from the plurality of antennas. The switch 484 may be enabled to switch between a transmit operation or a receive operation within the BT/cellular coexistence terminal 472. The switch 484 may also be enabled to switch between transmission of data from the cellular radio portion 476, and transmission of data from the BT radio portion 474. The switch 484 may also be enabled to allow simultaneous transmission of cellular protocol data and BT protocol data utilizing the plurality of antennas, antenna 1 480a and antenna 2 480b.

In accordance with an embodiment of the invention, the plurality of antennas, antenna 1 480a and antenna 2 480b may be enabled to transmit data simultaneously. For example, antenna 1 480a may be enabled to transmit BT protocol data and may be polarized at zero degrees while antenna 2 480b may be enabled to transmit cellular protocol data and may be polarized orthogonally with respect to antenna 1 480a. For example, antenna 2 480b may be polarized at 90 degrees and may be simultaneously transmitting cellular protocol data. Notwithstanding, antenna 1 480a may be enabled to transmit cellular protocol data and may be polarized at zero degrees, for example, while antenna 2 480b may be enabled to transmit BT protocol data and may be polarized at 90 degrees.

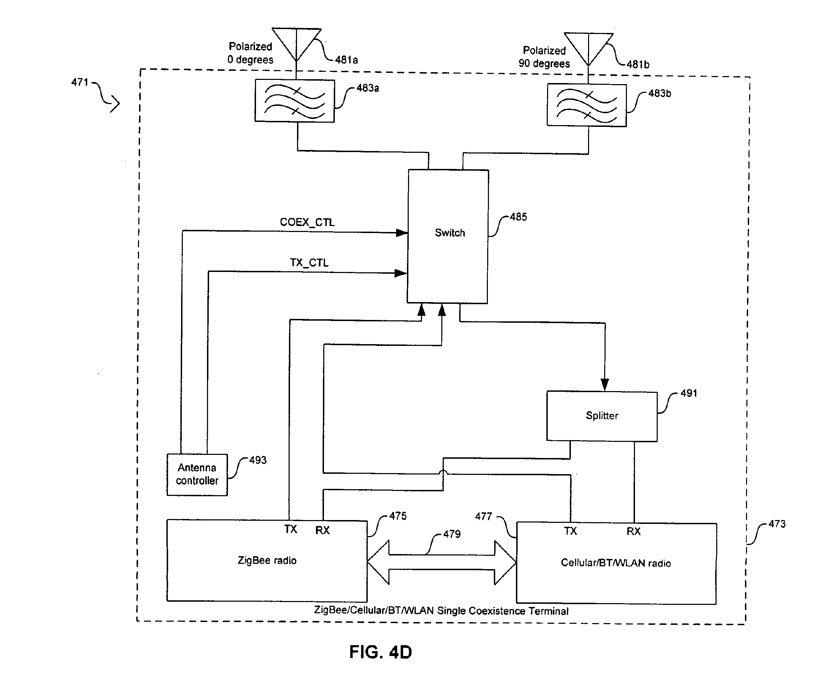

FIG. 4D is a block diagram illustrating another embodiment of an exemplary usage model for a coexistence system that supports ZigBee radio and one of cellular, Bluetooth and WLAN radio operations, in accordance with an embodiment of the invention. Referring to FIG. 4D, the ZigBee/cellular/BT/WLAN collaborative radio architecture 471 may comprise a plurality of antennas, for example, antenna 1 481 a and antenna 2 481 b, and a ZigBee/cellular/BT/WLAN coexistence terminal 473. The ZigBee/cellular/BT/WLAN coexistence terminal 473 may comprise a plurality of bandpass filters, for example, bandpass filters 483a and 483b, a switch 485, a splitter 491, an antenna controller 493, a ZigBee radio portion 475 and a cellular/BT/WLAN radio portion 477.

The plurality of antennas, antenna 1 481 a and antenna 2 481 b may comprise suitable logic, circuitry, and/or code that may be enabled to provide transmission and reception of ZigBee and at least one of: cellular, BT, and WLAN communication. In this regard, the plurality of antennas, antenna 1 481 a and antenna 2 481 b may be utilized for transmission and reception of a plurality of communication protocols. Antenna 1 481 a may be polarized with a zero degree polarization angle, for example. Antenna 2 481 b may be orthogonally polarized with respect to antenna 1 481 a, and may have a 90 degree polarization angle. The plurality of antennas, antenna 1 481a and antenna 2 481 b may be configured so as to provide isolation in space and/or time. The polarized antennas, antenna 1 481 a and antenna 2 481 b may enable reduction of space between the antennas and/or may provide isolation. The plurality of blocks in FIG. 4D may be substantially as described in FIG. 3D.

The switch 485 may comprise suitable logic, circuitry, and/or code that may be enabled to select from a plurality of signals and output a selected plurality of signals. The switch 485 may be implemented by utilizing, for example, single pull double throw (SPDT) switching devices or by utilizing a multiplexer (MUX), for example. The selection operation of the switch 485 may be controlled by a plurality of control signals such as a transmission control (TX_CTL) signal and a coexistence control (COEX_CTL) signal generated by the antenna controller 493. The switch 485 may be enabled to switch between the plurality of antennas, antenna 1 481a and antenna 2 481b alternately in order to receive communication signals from the plurality of antennas. The switch 485 may be enabled to switch between a transmit operation or a receive operation within the ZigBee/cellular/BT/WLAN coexistence terminal 473. The switch 485 may also be enabled to switch between transmission of data from the ZigBee radio portion 475, and transmission of data from the cellular/BT/WLAN radio portion 477. The switch 485 may also be enabled to allow simultaneous transmission of ZigBee protocol data and at least one of: cellular, BT, and WLAN protocol data utilizing the plurality of antennas, antenna 1 481 a and antenna 2 481b.

In accordance with an embodiment of the invention, the plurality of antennas, antenna 1 481a and antenna 2 481b may be enabled to transmit data simultaneously. For example, antenna 1 481a may be enabled to transmit ZigBee protocol data and may be polarized at zero degrees while antenna 2 481 b may be enabled to transmit at least one of: cellular, BT, and WLAN protocol data and may be polarized orthogonally with respect to antenna 1 481a. For example, antenna 2 481 b may be polarized at 90 degrees and may be simultaneously transmitting at least one of: cellular, BT, and WLAN protocol data. Notwithstanding, antenna 1 481a may be enabled to transmit at least one of: cellular, BT, and WLAN protocol data and may be polarized at zero degrees, for example, while antenna 2 481 b may be enabled to transmit ZigBee protocol data and may be polarized at 90 degrees.

In accordance with an embodiment of the invention, a method and system for utilizing polarized antennas in coexistence systems may include a coexistence system, for example, a WLAN/BT coexistence terminal 302 that comprises a first communication device, WLAN radio portion 304 and a second communication device, BT radio portion 306. The WLAN radio portion 304 may be enabled to communicate WLAN protocol data utilizing a first polarized antenna, for example, antenna 1 310a. The BT radio portion 306 may be enabled to communicate BT protocol data utilizing a second antenna, for example, antenna 2 310b that is orthogonally polarized with respect to the first polarized antenna, antenna 1 310a.

The first communication device may be enabled to handle a first communication protocol selected from a group consisting of a Bluetooth (BT) protocol, a Wireless Local Area Network (WLAN) protocol, a cellular protocol, and a ZigBee protocol. The second communication device may be enabled to handle a second communication protocol selected from a group consisting of BT protocol, WLAN protocol, cellular protocol, and ZigBee protocol excluding the first selected communication protocol. For example, the first communication device may be a WLAN radio portion 304 (FIG. 3A) that may be enabled to handle WLAN protocol data while the second communication device may be a BT radio portion 306 that may be enabled to handle BT protocol data. The first communication device may be a BT radio portion 374 (FIG. 3C) that may be enabled to handle BT protocol data while the second communication device may be a cellular radio portion 376 that may be enabled to handle cellular protocol data. The first communication device may be a cellular radio portion 346 (FIG. 3B) that may be enabled to handle cellular protocol data while the second communication device may be a WLAN radio portion 344 that may be enabled to handle WLAN protocol data. The first communication device may be a ZigBee radio portion 375 (FIG. 3D) that may be enabled to handle ZigBee protocol data while the second communication device may be one of: a cellular/BT/WLAN radio portion 377 that may be enabled to handle at least one of: cellular protocol data, BT protocol data, or WLAN protocol data.

The plurality of antennas, antenna 1 411 a and antenna 2 411b may be enabled to transmit data simultaneously. For example, the WLAN/Bluetooth collaborative radio architecture 400 may be enabled to transmit BT protocol data via the BT radio portion 406 utilizing the first polarized antenna, antenna 1 410a. The WLAN/Bluetooth collaborative radio architecture 400 may be enabled to transmit WLAN protocol data via the WLAN radio portion 404 utilizing the second antenna, antenna 2 410b that is orthogonally polarized with respect to the first polarized antenna, antenna 1 410a.

The plurality of antennas, antenna 1 410a and antenna 2 410b may be enabled to receive data simultaneously. For example, the WLAN/Bluetooth collaborative radio architecture 400 may be enabled to receive BT protocol data via the BT radio portion 406 utilizing the first polarized antenna, antenna 1 410a. The WLAN/Bluetooth collaborative radio architecture 400 may be enabled to receive WLAN protocol data via the WLAN radio portion 404 utilizing the second antenna, antenna 2 410b that is orthogonally polarized with respect to the first polarized antenna, antenna 1 410a.

Another embodiment of the invention may provide a machine-readable storage, having stored thereon, a computer program having at least one code section executable by a machine, thereby causing the machine to perform the steps as described above for utilizing polarized antennas in coexistence systems.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for providing wireless communication, the method comprising:
in a single coexistence terminal comprising at least a first communication device that handles a first communication protocol and a second communication device that handles a second communication protocol, communicating data via said first communication device utilizing a first polarized antenna; and
communicating data via said second communication device utilizing a second antenna that is orthogonally polarized with respect to said first polarized antenna.

2. The method according to claim 1, wherein said first communication device handles said first communication protocol selected from a group consisting of a Bluetooth (BT) protocol, a Wireless Local Area Network (WLAN) protocol, a cellular protocol, and a ZigBee protocol.

3. The method according to claim 2, wherein said second communication device handles said second communication protocol selected from a group consisting of said BT protocol, said WLAN protocol, said cellular protocol, and said ZigBee protocol excluding said selected said first communication protocol.

4. The method according to claim 1, wherein said communicated data is at least one of: Bluetooth (BT) protocol data, Wireless Local Area Network (WLAN) protocol data, cellular protocol data, and ZigBee protocol data.

5. The method according to claim 1, comprising transmitting said data via said first communication device utilizing said first polarized antenna.

6. A machine-readable storage having stored thereon, a computer program having at least one code section for providing wireless communication, the at least one code section being executable by a machine for causing the machine to perform steps comprising:
in a single coexistence terminal comprising at least a first communication device that handles a first communication protocol and a second communication device that handles a second communication protocol, communicating data via said first communication device utilizing a first polarized antenna; and
communicating data via said second communication device utilizing a second antenna that is orthogonally polarized with respect to said first polarized antenna.

7. The machine-readable storage according to claim 6, wherein said first communication device handles said first communication protocol selected from a group consisting of a Bluetooth (BT) protocol, a Wireless Local Area Network (WLAN) protocol, a cellular protocol, and a ZigBee protocol.

8. A system for achieving diversity gain in a communication network, the system comprising:
in a single coexistence terminal comprising at least a first communication device that handles a first communication protocol and a second communication device that handles a second communication protocol, at least one circuit that enables communication of data via said first communication device utilizing a first polarized antenna; and
said at least one circuit enables communication of data via said second communication device utilizing a second antenna that is orthogonally polarized with respect to said first polarized antenna.

9. The system according to claim 8, wherein said first communication device handles said first communication protocol selected from a group consisting of a Bluetooth (BT) protocol, a Wireless Local Area Network (WLAN) protocol, a cellular protocol, and a ZigBee protocol.

10. The system according to claim 9, wherein said second communication device handles said second communication protocol selected from a group consisting of said BT protocol, said WLAN protocol, said cellular protocol, and said ZigBee protocol excluding said selected said first communication protocol.
